(19) Europäisches Patentamt
European Patent Office
Office européen des brevets

(11) **EP 1 336 084 B1**

(12) **EUROPÄISCHE PATENTSCHRIFT**

(45) Veröffentlichungstag und Bekanntmachung des Hinweises auf die Patenterteilung:
**23.12.2009 Patentblatt 2009/52**

(21) Anmeldenummer: **01993819.0**

(22) Anmeldetag: **03.11.2001**

(51) Int Cl.:
*G01J 3/18* (2006.01)     *G01J 3/28* (2006.01)
*G01J 3/02* (2006.01)

(86) Internationale Anmeldenummer:
**PCT/EP2001/012750**

(87) Internationale Veröffentlichungsnummer:
**WO 2002/039077 (16.05.2002 Gazette 2002/20)**

(54) **VERFAHREN ZUR AUSWERTUNG VON ECHELLE-SPEKTREN**

METHOD FOR THE ANALYSIS OF ECHELLE SPECTRA

PROCEDE D'ANALYSE DE SPECTRES D'ECHELLES

(84) Benannte Vertragsstaaten:
**AT BE CH CY DE DK ES FI FR GB GR IE IT LI LU MC NL PT SE TR**

(30) Priorität: **13.11.2000 DE 10055905**

(43) Veröffentlichungstag der Anmeldung:
**20.08.2003 Patentblatt 2003/34**

(60) Teilanmeldung:
**07100392.5 / 1 783 468**
**09156127.4 / 2 068 134**

(73) Patentinhaber:
• **Gesellschaft zur Förderung angewandter Optik, Optoelektronik, Quantenelektronik und Spektroskopie e.V. (G O S)**
**12489 Berlin (DE)**
• **Gesellschaft zur Förderung der Analytischen Wissenschaften e.V.**
**44139 Dortmund (DE)**

(72) Erfinder:
• **FLOREK, Stefan**
**12526 Berlin (DE)**
• **OKRUSS, Michael**
**14482 Potsdam (DE)**
• **BECKER-ROSS, Helmut**
**12557 Berlin (DE)**

(74) Vertreter: **Weisse, Renate et al**
**Weisse & Wolgast**
**Bökenbuschstr. 41**
**42555 Velbert (DE)**

(56) Entgegenhaltungen:
DE-A- 3 326 868     DE-A- 4 017 317
DE-A- 4 128 506     DE-A- 19 708 462
US-A- 4 856 898     US-A- 5 253 183
US-A- 5 596 407

• **PATENT ABSTRACTS OF JAPAN vol. 014, no. 226 (P-1047), 14. Mai 1990 (1990-05-14) & JP 02 054130 A (ANRITSU CORP), 23. Februar 1990 (1990-02-23)**
• **SCHEELINE A ET AL: "DESIGN AND CHARACTERIZATION OF AN ECHELLE SPECTROMETER FOR FUNDAMENTAL AND APPLIED EMISSION SPECTROCHEMICAL ANALYSIS" APPLIED SPECTROSCOPY, THE SOCIETY FOR APPLIED SPECTROSCOPY. BALTIMORE, US, Bd. 45, Nr. 3, 1. März 1991 (1991-03-01), Seiten 334-346, XP000200998 ISSN: 0003-7028**
• **PELLETIER M J: "RAMAN SPECTROSCOPY USING AN ECHELLE SPECTROGRAPH WITH CCD DETECTION" APPLIED SPECTROSCOPY, THE SOCIETY FOR APPLIED SPECTROSCOPY. BALTIMORE, US, Bd. 44, Nr. 10, 1. Dezember 1990 (1990-12-01), Seiten 1699-1705, XP000169324 ISSN: 0003-7028**

EP 1 336 084 B1

**Beschreibung**

**Technisches Gebiet**

Die Erfindung betrifft ein Echelle-Spektrometer nach dem Oberbegriff des Anspruchs 1. Die Erfindung betrifft weiterhin ein Verfahren zur Kompensation von Verschiebungen eines Echelle-Spektrums in der Austrittsebene eines Echelle-Spektrometers.

**Stand der Technik**

Es ist bekannt, hochaufgelöste Spektren mittels Echelle-Spektrometern zu erzeugen, bei denen sich der Wellenlängenbereich auf ein Vielzahl von Ordnungen verteilt. Die Ordnungen werden quer zur Dispersionsrichtung des Echellegitters (Hauptdispersionsrichtung) mittels eines weiteren Dispersionselementes getrennt. Beispiele solcher Anordnungen sind in dem Aufsatz "Adaptation of an echelle spectrograph to a large CCD detector" von S. Florek, H. Becker-Roß, T. Florek in Fresenius J. Anal. Chem. (1996) 355, Seiten 269-271 beschrieben. Hier wird ein Echelle-Gitter verwendet, bei welchem sich die interessierenden Wellenlängen des UV/VIS-Bereichs etwa in 80ter Ordnung befinden.

Bei diesen Spektrometern wird ein kleiner Spektralbereich aus dem Spektrum eines Spektrometers niedriger Auflösung mittels eines Austrittsspalts ausgewählt und mittels Diodenzeilen oder dergleichen detektiert. Bei der punktweisen Aufnahme der Spektren ist man entweder auf eine gewisse Anzahl von Punkten oder Spektralbereichen begrenzt, die mit jeweils zugehörigen Detektoren erfasst werden, oder das Spektrum wird durch Drehung von Gitter und/oder Prisma auf den Detektor geschoben.

Neuere Spektrometer sind mit Flächendetektoren ausgestattet. Diese ermöglichen die simultane Aufnahme des gesamten Spektrums oder zumindest großer Bereiche davon. In der DE 197 08 462 A1 wird ein Echelle-Spektrometer beschrieben, das eine interne Ordnungstrennung aufweist und somit ein zweidimensionales Spektrum erzeugt. Bei der beschriebenen Anordnung wird mit Laserablation ein Emissionsspektrum erzeugt. Dieses Emissionsspektrum besteht aus vereinzelten Linien zwischen denen sich große Bereiche befinden, auf die kein Licht fällt. Diese Bereiche werden nicht benötigt. Um das Auslesen zu beschleunigen, werden diese Bereiche hardwaremäßig gebinnt, d.h. zusammengefasst und verworfen. Dann brauchen nur die "interessanten" Bereiche ausgelesen und gespeichert werden.

Aus der Veröffentlichung "Design and Characterization of an Echelle Spectrometer for Fundamental and Applied Emission Spectrochemical Analysis" von A. Scheeline et al. in Applied Spectroscopy 45 (1991), S.334 ist es bekannt, daß wie in jedem Gerät mit gekreuzter Dispersion die Ordnungen nicht parallel zueinander verlaufen und dass jede Routine-Wellenlängenkalibration durchgeführt werden kann, wenn die Lage einer einzigen Linie auf der Fläche bekannt ist. Die zweidimensionale Information müsse in ein lineares Spektrum konvertiert werden. Es wird insbesondere ausgeführt, daß die spektralen Daten im allgemeinen mehr als ein Pixel füllen und das geeignete Gruppen von Pixeln zusammen gefasst werden, damit nur ein Wert für eine Wellenlänge vorliegt.

Bei der Verwendung derartiger Flächendetektoren ist es wichtig, eine eindeutige Zuordnung der Pixelposition zu einer Wellenlänge zu kennen und möglichst das gesamte Licht einer Wellenlänge für das Spektrum zu erfassen. Durch Veränderungen des Spektrometers aufgrund von Temperaturschwankungen, Erschütterungen und dergleichen wird diese Zuordnung jedoch gestört. Weiterhin verteilt sich das Licht einer Wellenlänge üblicherweise auf mehrere Pixel, deren Intensitäten aufaddiert werden müssen, um ein Spektrum mit gutem Signal-Rauschverhältnis zu erhalten. Dabei muß berücksichtigt werden, daß die Ordnungen nicht exakt gerade, sondern leicht gekrümmt, nicht parallel und nicht äquidistant auf dem Detektor verlaufen.

Die Bestimmung dieser sogenannten Binning-Bereiche zur Ermittlung des Intensitätswertes für jeweils eine Spektrallinie kann also nicht nur durch die Bestimmung der Höhe des Spaltbildes in Querdispersionsrichtung erfolgen, sondern muß die Krümmung der Ordnungen berücksichtigen. Diese hängt insbesondere von der Ausgestaltung der Spektrometergeometrie und den Eigenschaften der optischen Komponenten ab und ist durch exakte Berechnung des geometrischen Strahlverlaufs nur mit großem Aufwand zu bestimmen. Die rechnerische Bestimmung der Ordnungskrümmung berücksichtigt zudem keine Driften oder sonstige Veränderungen der Linienpositionen in der Austrittsebene aufgrund von Umwelteinflüssen.

Die Kalibrierung des Spektrums mit absoluten Zuordnungen der Wellenlängen zu den Intensitätswerten erfordert ebenfalls einen erheblichen Zeitaufwand, wenn sie manuell erfolgt, da sich die interessierenden Wellenlängen auf eine Vielzahl von Ordnungen verteilen und daher nicht immer reproduzierbar eine exakte Zuordnung der Wellenlänge zu einem Pixel möglich ist.

Aus der DD 260 326 ist es bekannt, die optischen Komponenten eines Echelle-Spektrometers derart anzuordnen, daß eine nachträgliche Justage beim Geräteaufbau möglich ist. Diese Justage dient der Korrektur von Toleranzen, die bei der Herstellung der optischen Komponenten üblicherweise auftreten. Die Herstellung der Komponenten kann daher mit größeren Toleranzen erfolgen, wodurch die Kosten gesenkt werden. Eine regelmäßige Kompensation von Drift oder dergleichen ist nicht vorgesehen, da diese viel Zeit in Anspruch nehmen würde.

Die Geräte des Standes der Technik wurden üblicherweise in klimatisierten Labors verwendet, wo die mit Temperaturschwankungen einhergehende Drift üblicherweise klein ist, oder es wurde eine passive Kompensation der Drift durch zum Beispiel Thermostatisierung verwendet. Die Anwendung von Spektrometern außerhalb solcher Labors ist entweder unmöglich oder erfordert einen erheblichen Aufwand um eine Stabilisierung zu erreichen.

**Offenbarung der Erfindung**

Es ist Aufgabe der Erfindung, ein Echellespektrometer zu schaffen, welches auf einfache Weise eine hochgenaue Bestimmung der Binning-Bereiche in der Austrittsebene ermöglicht. Es ist weiterhin Aufgabe der Erfindung, ein Verfahren zu schaffen, mit welchem diese Bestimmung ausgeführt werden kann.

Erfindungsgemäß wird die Aufgabe gelöst durch das Kennzeichen den unabhängigen Ansprüche 1 und 6. Mit einem solchen Spektrometer wird es ermöglicht, die Binning-Bereiche, auf die Strahlung fällt zu ermitteln und durch Hardware oder Software zusammenzufassen. Dadurch wird das Signal-Rausch-Verhältnis der Spektren verbessert und ein "gerades" Spektrum erzeugt. Die Ordnungen im zweidimensionalen Spektrum in der Austrittsebene eines Echelle-Spektrometers werden durch die zweite Dispersion, welche zur Ordnungstrennung nötig ist, gekrümmt. Durch ein kontinuierliches Spektrum, welches in das Spektrometer einstrahlbar ist, werden die Ordnungen komplett detektierbar. Dadurch kann insbesondere das Minimum zwischen zwei benachbarten Ordnungen an jedem Punkt in der Austrittsebene bestimmt werden, was bei einem Linienspektrum nicht in dieser Form möglich ist. Der geometrische Verlauf dieses Minimums kann dann mittels einer Funktion beschrieben werden und ermöglicht die Bestimmung der Binning-Bereiche.

Die mit auswählbaren, benachbarten Detektorelementen gemessene Intensität kann hardwaremäßig zu einem Intensitätswert zusammenfassbar sein. Es ist aber auch möglich, die Intensitätswerte mittels Software aufzuaddieren.

Die Ordnungstrennung ist vorzugsweise gerade so groß, daß die Intentsitätsminima zwischen den Ordnungen sich auf nicht mehr als zwei Detektorelemente quer zu den Ordnungen verteilen. Dadurch wird ein hoher Füllfaktor, d.h. eine optimale Ausnutzung der Detektorfläche, erreicht. Die Anzahl der Bildelemente, die nicht für die Erfassung des Spektrums genutzt werden ist gering. Gleichzeitig ist aber das Minimum zwischen den Ordnungen ausreichend ausgeprägt um es zur Ermittlung der Binning-Bereiche zu verwenden. Bei einem guten Füllfaktor kann der Detektor so klein wie möglich gehalten werden, wodurch die Kosten verringert werden.

Die Aufgabe der Erfindung wird insbesondere durch ein Verfahren nach Anspruch 1 gelöst. Durch dieses Verfahren können auf einfache Weise die Binning-Bereiche entlang wenigstens einer Ordnung ermittelt werden. Es entsteht ein Spektrum mit "geraden" Ordnungen.

Statt des Verlaufs des Intensitätsminimums kann auch der Verlauf des Intensitätsmaximums bestimmt werden und die Binning-Bereiche können sich über einen Bereich erstrecken, für den gilt: $x = constant$ und $|y| < y + |\Delta y_{m, m+1}/2|$, wobei ($\Delta y_{m, m+1}$ den Abstand zwischen dem Maximum der Ordnung m und dem Maximum der Ordnung m+1 bezeichnet. Dies bietet sich insbesondere in den Fällen an, bei denen die Ordnungstrennung groß ist und kein eindeutiges Minimum mehr vorliegt.

Die Lage des Detektorelements nach Schritt (a) wird vorzugsweise durch folgende Schritte ermittelt:

(a1) Auswählen einer Detektorspalte (x),

(a2) Einstrahlen von Licht eines Strahlers mit kontinuierlichem Spektrum in das Spektrometer,

(a3) Bestimmen des Detektorelements in der ausgewählten Spalte (x), auf der das Intensitätsminimum für eine ausgewählte Ordnung (m) liegt,

(a4) Bestimmen des Detektorelements der nächsten benachbarten Spalte (x+1) auf der das Intensitätsminimum der drei zueinander benachbarten Detektorelemente liegt, die unmittelbar an das in Schritt (a3) bestimmte Detektorelement grenzen und

(a5) wiederholen des Schrittes (a4) für alle Spalten (x).

Dieses Verfahren arbeitet ähnlich wie eine rollende Kugel in einer Rinne: Ausgehend von einem Startwert in einer ausgewählten Detektorspalte und einer ausgewählten Ordnung wird jeweis das nächstgelegene, angrenzende Bildelement mit einem Intensitätsminimum gewählt. Die für die Auswahl betrachteten Bildelemente sind das in Spaltenrichtung direkt benachbarte Bildelement, sowie das Bildelement darüber und darunter, das jeweils mit einer Ecke an den Startwert angrenzt. Die Minima auf den so gewählten Bildelementen entsprechen im wesentlichen dem Verlauf des Minimums zwischen zwei Ordnungen.

In einer Ausgestaltung der Erfindung wird die Funktion nach Schritt (b) von einer Fitfunktion $y_{min}=y(x)$ durch die nach Schritt (a) ermittelten Detektorelemente gebildet. Dadurch werden Digitalisierungsfehler und Rauschen korrigiert. Die Fitfunktion kann zum Beispiel ein Polynom zweiten Grades oder dritten Grades sein.

Die Funktion wird vorzugsweise für jede Ordnung gespeichert, bei Polynomen zum Beispiel in Form der Koeffizienten des Polynoms für jede Ordnung. In einer besonders bevorzugten Ausführungsform der Erfindung wird aus den miteinander korrespondierenden Koeffizienten des Polynoms jeder Ordnung eine ordnungsabhängige sekundäre Funktion gebildet und diese Funktion wird mittels einer Fitfunktion optimiert. Die Funktionen, die den Verlauf der Ordnungen beschreiben, ändern sich nämlich von Ordnung zu Ordnung nicht abrupt sondern stetig. Durch einen Fit dieser Funktionenschar kann die Genauigkeit bezüglich der Digitalisierungsfehler, des Rauschens und anderer Fehler weiter verbessert werden. Die sekundäre Fitfunktion kann wiederum von einem Polynom gebildet werden. Dann können die Polynomkoeffizienten der sekundären Fitfunktion gespeichert werden. Dadurch reduziert sich die für die Auswertung des Verlaufs der Ordnungen zu speichernde Datenmenge.

In einer Ausgestaltung der Erfindung liegen die Spalten des Detektors im wesentlichen senkrecht zur Dispersionsrichtung des Echelle-Gitters. Statt Detektorspalten können aber auch Detektorzeilen verwendet werden, wenn die Geometrie des Spektrometers derart ausgestaltet ist, daß das Spektrum im wesentlichen um 90 Grad gedreht ist.

Vorzugsweise liegt die Detektorspalte, die nach Schritt (a1) ausgewählt wird, im wesentlichen mittig im Spektrum. Dann wird die Funktion auf beiden Seiten der Spalte bestimmt.

Die Binning-Bereiche berücksichtigen die Intensitäten von Detektorelementen einer Spalte, die zur selben Ordnung gehören, vorzugsweise anteilig, wenn der Wert der Fitfunktion auf einem Detektorelement keinen ganzzahligen Wert in der Mitte des Detektorelements in Zeilen-Richtung annimmt. Dadurch wird ein Digitalisierungseffekt im Spektrum vermieden.

Ausgestaltungen der Erfindung ergeben sich aus den Unteransprüchen. Ausführungsbeispiele sind nachstehend unter Bezugnahme auf die beigefügten Zeichnungen näher erläutert.

**Kurze Beschreibung der Zeichnungen**

Fig.1         zeigt schematisch den Aufbau eines Echellespektrometers mit einem Prisma in Littrow-Anordnung

Fig.2         zeigt eine Seitenansicht eines Echelle-Gitters

Fig.3         ist eine Draufsicht auf den Strahlengang in dem Echellespektrometer aus Fig.1

Fig.4         zeigt schematisch die Ordnungen eines kontinuierlichen Spektrums auf einem Flächendetektor

Fig.5         ist eine Detaildarstellung des Gitteraufbaus

Fig.6         ist eine Detaildarstellung des Aufbaus des Prismas mit Kompensator

Fig.7         ist eine Detaildarstellung des Aufbaus des Kameraspiegels in Seitenansicht

Fig.8         ist eine Detaildarstellung des Aufbaus des Kameraspiegels in Vorderansicht

Fig.9         ist eine Detaildarstellung des Detektoraufbaus in Vorderansicht

Fig.10        ist eine Darstellung der Lage der Linien bei veränderlicher Temperatur bei Stabilisierung einer Linie

Fig.11        ist eine Darstellung der Lage der Linien bei veränderter Temperatur bei Stabilisierung aller Stellgrößen

Fig.12        zeigt die gekrümmten Ordnungen eines kontinuierlichen Spektrums und eine ausgewählte Spalte

Fig.13        zeigt den Intensitätsverlauf entlang der ausgewählten Spalte in Fig.12

Fig.14        zeigt die Fitfunktionen für die Minima zwischen den Ordnungen

Fig.15        zeigt das Echelle-Spektrum eines Linienstrahlers

Fig.16(a)-(e)  zeigt die Intensität entlang einer Ordnung und zunehmend geglättete Funktionen mit denen eine Untergrundkorrektur durchgeführt wird.

Fig.17a        zeigt die Intensität entlang einer Ordnung und den berechneten Untergrund

Fig.17b        zeigt die Untergrund-korrigierte Intensität entlang einer Ordnung

Fig.18        zeigt ein Echelle-Spektrometer nach einem anderen Ausführungsbeispiel

## Beschreibung der Ausführungsbeispiele

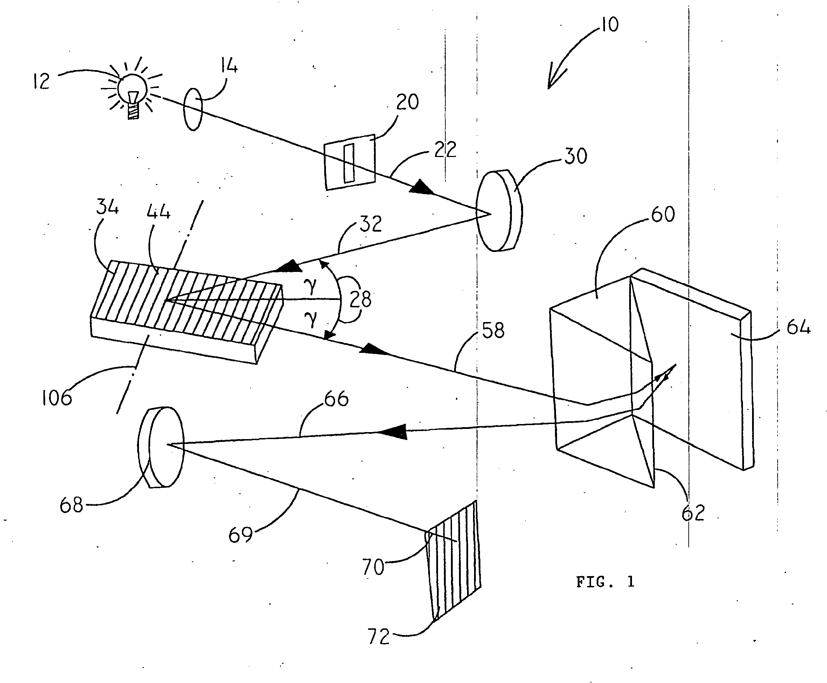

In Fig.1 ist ein erfindungsgemäßes Echelle-Spektrometer 10 schematisch dargestellt. Das Licht einer Lichtquelle 12 wird mittels einer Linse 14 oder eines Spiegels auf einen Eintrittsspalt 20 fokussiert. Die optische Achse wird durch eine Linie 22 in Fig.1 dargestellt. Das Licht tritt durch den Eintrittsspalt 20 und wird mittels eines sphärischen Konkav-Spiegels 30 parallelisiert. Das parallele Bündel 32 trifft anschließend auf ein Echelle-Gitter 34, wo es dispergiert wird. Die Gitterfurchen 44 verlaufen horizontal. Die Dispersion erfolgt senkrecht zu den Gitterfurchen, d.h. vertikal in Fig.1.

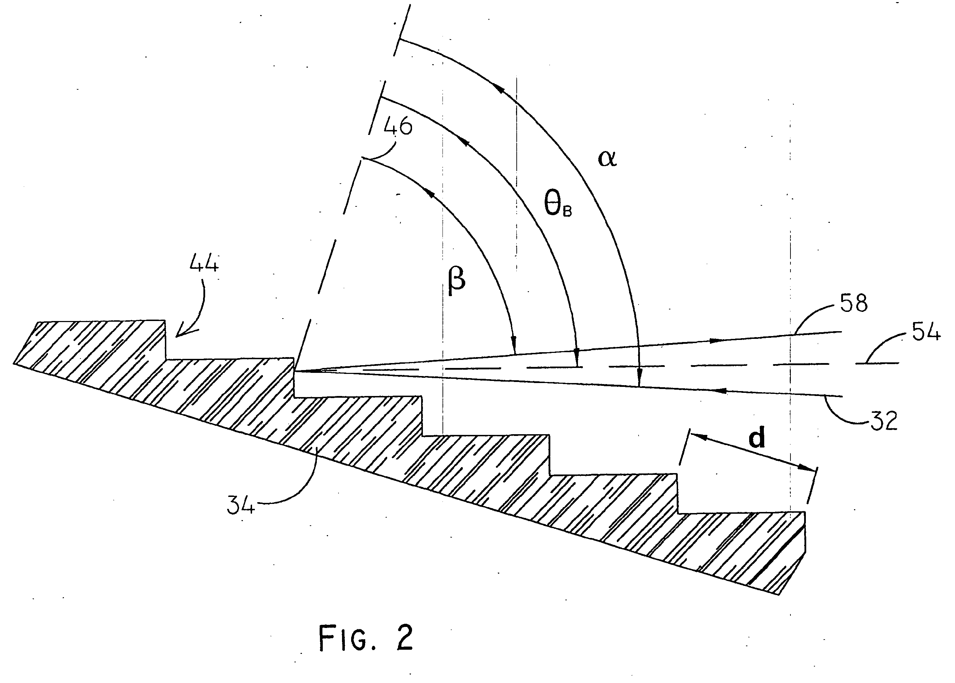

In Fig.2 ist das Echelle-Gitter 34 nochmals im Detail dargestellt. Der Abstand der Gitterfurchen ist mit d bezeichnet. Der Winkel des einfallendes Strahls 32 mit der Senkrechten 46 auf das Gitter ist mit $\alpha$ bezeichnet. Der Winkel des gebeugten Strahls 58 mit der Senkrechten 46 auf das Gitter ist mit $\beta$ bezeichnet. $\theta_B$ bezeichnet den BlazeWinkel der Furchen 44 des Echelle-Gitters 34.

Das parallele Lichtbündel 32 in Fig.1 fällt bezogen auf die Dispersionsebene unter einem sehr flachen Winkel auf das Echelle-Gitter 34. Der Winkel entspricht annähernd 90 Grad minus dem Blazewinkel des Echelle-Gitters.

Durch einen hohen Blazewinkel wird die Intensität des Beugungsbildes auf hohe Beugungsordnungen in einem typischen Bereich zwischen dreißigster und hundertdreißigster Ordnung für die zu messenden Wellenlängen konzentriert. Ein großer Beugungswinkel, der im vorliegenden Fall 76 Grad beträgt, bewirkt eine hohe Dispersion. Das Echelle-Gitter 34 hat eine geringe Strichzahl von 75 Strichen pro Millimeter, um für Wellenlängen im Bereich von 190 nm bis 852 nm eine möglichst hohe Winkeldispersion zu erreichen. Typischerweise werden Strichzahlen von 25 bis 250 Striche pro Millimeter verwendet. Durch den großen Einfallswinkel muß das Gitter 34 entsprechend lang sein, wenn die gesamte Strahlung auf das Gitter auftreffen soll.

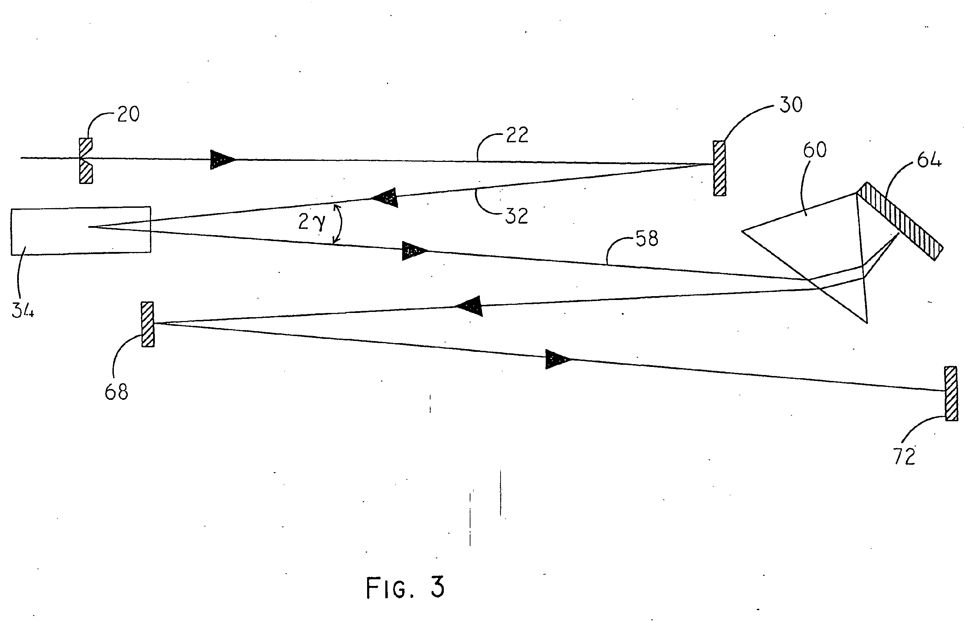

Das parallele Bündel 32 fällt bezogen auf eine Ebene senkrecht zu den Gitterfurchen unter einem Winkel $2\gamma$, dem sogenannten off-plane Winkel, auf das Gitter 34. Dieser ist in Fig.3 nochmal deutlicher dargestellt. Dort wird das Bündel in der Ebene parallel zu den Gitterfurchen 44 reflektiert und in der dazu senkrechten Dispersionsebene gebeugt.

Der reflektierte und dispergierte Strahl 58 wird durch ein Prisma 60 mit Dachkante 62 gelenkt. In Fig. 1 und drei verläuft die Dachkante 62 des Prismas 60 senkrecht. Der Strahl 58 wird in dem Prisma 60 dispergiert, trifft dahinter auf einen Planspiegel 64 und wird zurück in das Prisma 60 reflektiert. Dort wird der Strahl erneut dispergiert. Entsprechend der senkrechten Dachkante 62 des Prismas 60 wird der Strahl zweifach in horizontaler Richtung, also senkrecht zur Gitterdispersionsrichtung (Hauptdispersionsrichtung) dispergiert (Querdispersion). Die in Hauptdispersionsrichtung überlappenden Ordnungen werden durch die im Vergleich zur Hauptdispersion erheblich geringere Querdispersion am Prisma 60 in einer Richtung senkrecht zur Hauptdispersionsrichtung auseinandergezogen und gekrümmt.

Nach der Fokussierung der für jeweils genau eine Wellenlänge parallelen Bündel 66 mittels eines weiteren sphärischen Konkav-Spiegels 68 erhält man somit einen fokussierten Strahl 69. Es entsteht ein zweidimensionales Spektrum 70 in der Austrittsebene 72.

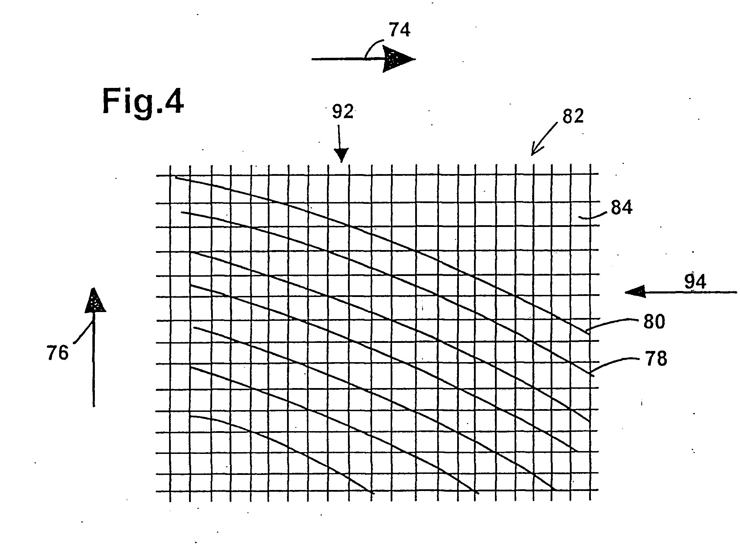

Ein typisches Spektrum eines kontinuierlichen Strahlers ist schematisch in Fig. 4 dargestellt. Die Wellenlängen verteilen sich in Hauptdispersionsrichtung in Richtung des Pfeils 74. Die verschiedenen Ordnungen werden in Querdispersionsrichtung, dargestellt durch Pfeil 76, auseinandergezogen. So liegt die 100.Ordnung 78, z.B. neben der 99.Ordnung, die mit 80 bezeichnet ist.

Ein Charged-Coupled-Device (CCD)-Detektor 82 üblicher Bauart ist in der Austrittsebene angeordnet. Der CCD-Detektor ist mit Bildelementen 84 versehen, welche in einem rechtwinkligen Raster in horizontalen Detektorzeilen 94 und vertikalen Detektorspalten 92 angeordnet sind. Der Detektor ist so ausgerichtet, daß die Detektorzeilen 94 im wesentlichen entlang den Beugungsordnungen des Echelle-Gitters 34 verlaufen. Durch die Prismendispersion sind die Beugungsordnungen 78, 80 jedoch leicht gekrümmt, nicht parallel und nicht äquidistant. In Fig.4 ist dies zur besseren Veranschaulichung etwas übertrieben dargestellt.

Jedem Bildelement kann ein Paar (x, y) zugeordnet werden, das seine Lage eindeutig beschreibt. Der x-Wert entspricht der x-ten Detektorspalte von links aus gesehen und der y-Wert entspricht der y-ten Detektorzeile von unten aus gezählt.

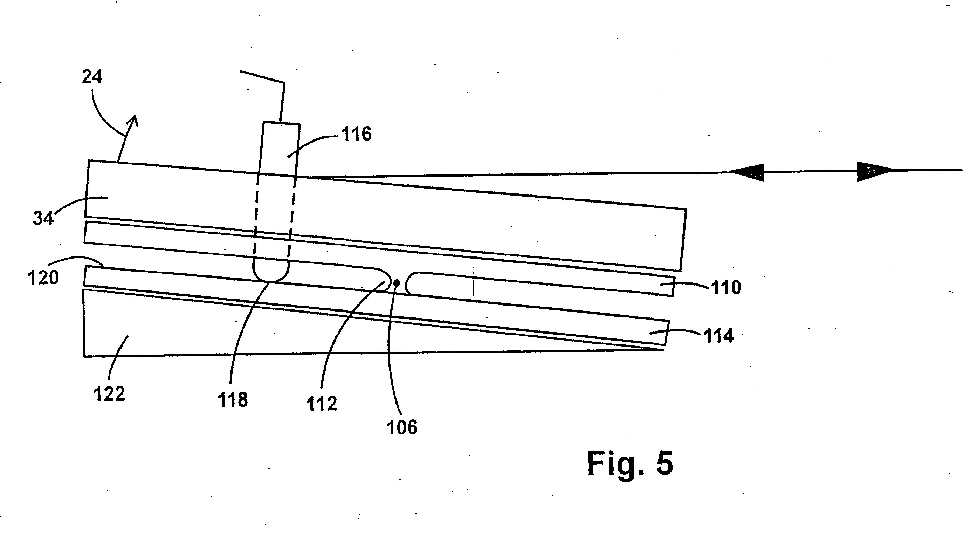

Das Gitter 34 ist um eine Achse 106 beweglich, die parallel zu den Gitterfurchen 44 verläuft. Die Achse 106 verläuft entlang einer Biegestelle 112 (s. Fig.5). Die Biegestelle 112 verbindet eine obere Metallplatte 110 mit einer unteren Metallplatte 114. Das Gitter 34 liegt auf der oberen Metallplatte 110 auf und ist auf ihr aufgeklebt. Die untere Metallplatte 114 liegt auf einem Keil 122 auf, dessen Winkel im wesentlichen 90 Grad minus dem Blazewinkel des Gitters entspricht. Ein Piezoelement 116 ragt seitlich vom Gitter durch die obere Metallplatte 110 und übt mit seinem Ende einen Druck auf die untere Metallplatte 114 aus.

Wenn die Spannung an dem Piezoelement 116 erhöht wird, dehnt es sich aus und der Druck auf die untere Metallplatte 114 wird erhöht. Dadurch wird das Gitter weiter in Richtung des Pfeils 124 verkippt. Bei Verringerung der Spannung erfolgt dementsprechend eine Drehung des Gitters in entgegengesetzter Richtung.

In einem nicht dargestellten Ausführungsbeispiel erfolgt die Drehung mittels eines rechnergesteuerten Schrittmotors und einer damit verbundenen Feinspindel. Mit der Drehung des Gitters 34 erfolgt die Verschiebung einer Linie einer ausgewählten Wellenlänge im wesentlichen in Richtung der Hauptdispersion in der Austrittsebene, also in Richtung des Pfeils 74 in Fig.4 beziehungsweise in der dazu entgegengesetzten Richtung.

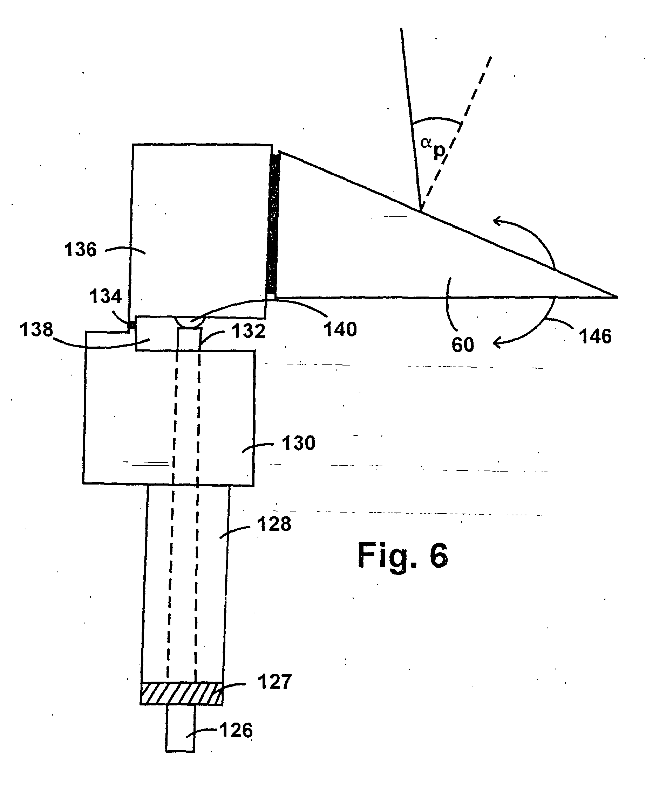

In Fig.6 ist die Prismenanordnung dargestellt. Ein Messingstab 126 ist an dem Befestigungspunkt 127 mit einem Invargehäuse 128 verbunden. Das Invargehäuse 128 ist an einem Metallgehäuse 130 befestigt. Der Messingstab 126 erstreckt sich durch das Metallgehäuse 130 und ragt mit seinem freien Ende 132 darüber hinaus. Das mit dem mechanischen Aufbau des Spektrometers fest verbundene Metallgehäuse 130 ist über eine Biegestelle 134 mit einem Metallblock 136 verbunden. An dem Metallblock ist das Prisma 60 angeklebt. Wenn sich die Umgebungstemperatur erhöht erhöht, sich die Prismendispersion. Bei einer Temperaturerhöhung dehnt sich aber auch der Messingstab 126 aus. Das Invargehäuse 128 dehnt sich aufgrund der Eigenschaften von Invar nicht oder nur vernachlässigbar aus. Durch die Ausdehnung des Messingstabs wird ein Druck auf einen Druckpunkt 140 an der Oberfläche des Metallblocks 136 ausgeübt. Der Abstand 138 des Metallgehäuses 130 vom Metallblock 136 verändert sich dann an dieser Stelle derart, daß eine Drehung des Metallblocks 136 um die Biegestelle erfolgt. Dabei bildet die Biegestelle 134 die Drehachse. Durch die Drehung des Metallblocks 136 wird auch das daran befestigte Prisma 60 gedreht und zwar in der Art, daß sich der Einfallswinkel $\alpha_p$, und damit die Dispersion verringert. Bei geeigneten Abmessungen der Komponenten der Anordnung kann die Dispersionsverringerung durch die Drehung gerade so gestaltet werden, daß sie die Dispersionserhöhung durch die Erhöhung der mit der Umgebungstemperatur gekoppelten Prismentemperatur gerade kompensiert.

In einem nicht dargestellten alternativen Ausführungsbeispiel ist das Prisma 60 um eine Achse parallel zur Dachkante 62 drehbar. Auch diese Drehung kann Schrittmotor-oder Piezo-gesteuert erfolgen. Das Prisma 60 wird dazu auf einem drehbaren Tisch befestigt. Durch eine Drehung des Prismas 60 wird neben der Änderung der Querdispersion die Verschiebung aller Ordnungen in Richtung des Pfeils 76 (Fig.3) beziehungsweise in der dazu entgegengesetzten Richtung bewirkt.

Am Kameraspiegel 68 sind zwei Piezokristalle vorgesehen, die über einen Computer und eine Spannungsversorgung angesteuert werden. Die Piezos sind derart am Kameraspiegel angebracht, daß dieser um zwei Achsen mittels der Piezos gedreht werden kann. Dadurch kann das gesamte Spektrum in der Austrittsebene ohne wesentliche Verzerrung in vertikaler und horizontaler Richtung verschoben werden.

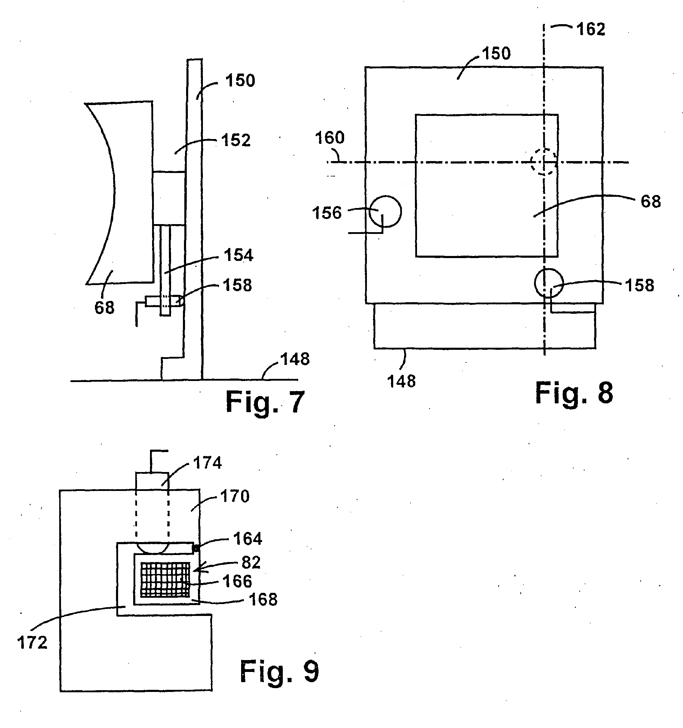

In Fig.7 und Fig.8 ist der Aufbau des Kameraspiegels 68 im Detail dargestellt. Auf der Grundplatte 148 des Spektrometers ist eine senkrechte Platte 150 angeschraubt. Der Kameraspiegel 68 ist mit seiner Rückseite beweglich an dieser Platte 150 angebracht, wobei zwischen der Rückseite des Kameraspiegels 68 und der Platte 150 ein Zwischenraum 152 vorgesehen ist. Eine weitere Platte 154 sitzt in diesem Zwischenraum 152 und ist mit einem in zwei zueinander senkrechten Richtungen beweglichen Gelenkelement mit der Platte 150 verbunden. Durch diese Platte 154 ragen zwei Piezoelemente 156 und 158. Die Piezoelemente 156 und 158 sind mit der Platte 154 fest verbunden. Wenn sich eines der Piezoelemente oder beide ausdehnen, wird ein Druck auf einen Druckpunkt auf der Oberfläche der senkrechten Platte 150 ausgeübt und die Platte 154 verkippt. Die Platte 154 liegt an der Rückseite des Spiegels 68 an. Es wird somit auch eine Verkippung des Spiegels bewirkt. Die Verkippung erfolgt im wesentlichen um eine horizontale Achse 160 (s.Fig. 8), wenn der Druck durch das Piezoelement 158 erfolgt und im wesentlichen um eine vertikale Achse 162, wenn der Druck durch das Piezoelement 156 erfolgt.

Der Flächendetektor 82 in der Austrittsebene 72 des Spektrometers ist ebenfalls drehbar gelagert. Dies ist in Fig. 9 dargestellt. Die Drehachse 164 steht senkrecht auf der Detektoroberfläche 166. Durch geeignete Anordnung eines weiteren Piezokristalls, der ebenfalls computergesteuert mit einer Spannung versorgt wird, kann der Detektor 82 um einen definierten Winkel gedreht werden.

Hierzu ist der Detektor 82 auf einem inneren Metallblock 168 angeordnet, der über eine Biegestelle, der mit der Drehachse 164 zusammenfällt, mit einem äußeren Metallblock 170 verbunden ist. Der äußere Metallblock 170 ist fest mit der Spektrometergrundplatte verbunden. Der äußere Metallblock 170 erstreckt sich auf drei Seiten um den inneren Metallblock herum, wobei zwischen den Blöcken ein Zwischenraum 172 gebildet wird. Durch den äußeren Metallblock 170 ragt ein Piezoelement 174, welches sich über den Zwischenraum 172 erstreckt und auf den inneren Metallblock 168 drückt. Der Druckpunkt zwischen Piezoelement 174 und innerem Metallblock 168 liegt in einem Abstand von der Biegestelle 164. Wenn sich das Piezoelement aufgrund einer Spannungsänderung ausdehnt/zusammenzieht, dann wird der innere Metallblock 168 mit dem darauf befindlichen Detektor um die Achse 164 gedreht.

Das Gerät unterliegt bei Temperatur- oder Druckschwankungen oder sonstigen Veränderungen der Geräte-Umgebung einer Drift, das heißt einer mechanischen Verschiebung bzw. Verdrehung aller optischen Bauelemente aus ihren Sollpositionen. Durch diese Drift werden die Spektrallinien am Detektor ggf. verschoben, verzerrt oder gedreht. Dabei kann sich auch der Abstand zwischen zwei Spektrallinien ändern.

Zur Ermittlung des Intensitätsverlaufs der Strahlung aus einer Lichtquelle 12 in Abhängigkeit von der Wellenlänge (Spektrum) wird das Gerät zunächst justiert. Dazu werden der Ordnungsverlauf und die Lage der Ordnungen mit einer Referenz verglichen.

Um die Spektrallinien im gesamten Spektralbereich mit einer Abweichung von weniger als einer Pixelbreite auf einer definierten Referenzposition zu halten, müssen die Stellelemente an Gitter, Prisma, Kameraspiegel und Detektor entsprechend regelmäßig nachjustiert werden. Bei einem klimatisierten Labor reicht im allgemeinen eine Justierung am Tag, während bei Anordnungen zum Beispiel draußen im mobilen Einsatz praktisch vor jeder Messung eine Justierung vorgenommen werden muß.

Es werden jeweils die Stellelemente bewegt, die den größten Effekt auf das Spektrum haben, unahbhängig von der Ursache der ursprünglichen Verschiebung aus der Referenzlage. Die Ursache der Verschiebung ist oft auch nicht mehr feststellbar. Wenn sich zum Beispiel der Detektor aus seiner Lage linear verschoben hat, so wird trotzdem eine Justierung mittels der Piezoelemente am Kameraspiegel vorgenommen.

Bei der Geräteeinrichtung werden zunächst alle optischen Komponenten, d.h. Gitter, Kameraspiegel und Detektor in eine mittige Position gebracht. Dann wird eine Referenzlichtquelle, die über weite Bereiche des Spektrums Linienstrahlung emittiert, vor dem Eintrittsspalt des Spektrometers eingekoppelt und so justiert, daß auf dem Detektor scharfe Linien erscheinen. Als Referenzlichtquelle eignet sich zum Beispiel eine Edelgas-Pen-Ray-Lampe.

Die Lage der Spektrallinien in diesem Zustand wird dann als Referenzlage gespeichert. Dies geschieht in Form von x- und y-Werten zur Beschreibung des Detektorbildelements und der zugehörigen Intensität in relativen Einheiten. Es werden dann für jedes Stellelement und für jede Referenzlinie Stellgrößen-Kombinationen ermittelt, mit denen das Referenzspektrum erhalten wird. Die Stellgrößen-Kombinationen müssen experimentell ermittelt werden, da hier Herstellungstoleranzen, Abweichungen der Lage der Achsen von einem Gerät zum anderen und sonstige Unterschiede zwischen den korrespondierenden Komponenten verschiedener Spektrometer zu unterschiedlichen Stellgrößen-Kombinationen führen. Ist diese einmal ermittelt, so kann sie solange verwendet werden, wie die gleichen Bauteile verwendet werden.

Die Stellgrößen sind voneinander abhängig. Ist zum Beispiel der Abstand zweier Spektrallinien in einer Ordnung im Vergleich zu dem Abstand zwischen den gleichen Linien im Referenzspektrum zu groß, so kann dies nicht einfach mit einer Drehung des Gitters kompensiert werden. Eine Drehung des Gitters ist nämlich mit einer Verschiebung beider Linien verbunden, die dann widerum mit einer Kippung oder Drehung des Kameraspieges kompensiert werden muß. Eine solche Drehung kann auch eine Drehung des gesamten Spektrums in der Austrittsebene bewirken. Diese wird dann durch Drehung des Detektors kompensiert.

Es existiert aber für jedes Spektrum ein Satz von Werten für die Stellgrößen, mit dem das Spektrum in die Referenzlage geschoben werden kann. Diese Zuordnung von Spektrallinienpositionen zu einem Satz von Werten für die Stellgrößen wird fest für jedes Spektrometer gespeichert und zur Justage verwendet. Die Stellgrößen sind im vorliegenden Fall: "Gitterwinkel", "horizontale Lage des Gesamtspektrums", "vertikale Lage des Gesamtspektrums" und "Detektorwinkel". Die Spektrallinienpositionen werden gekennzeichnet durch die Werte für x- und y-Position, Wellenlänge, Halbwertsbreite und Intensität der Spektralline. X und Y bezeichnen die Lage eines Bildelementes.

Zur Justage wird die Lage der Spektrallinien der Referenzlichtquelle bestimmt und mit dem gespeicherten Referenzspektrum verglichen. Danach werden die Stellelemente entsprechend der gespeicherten Zuordnung betätigt. In einem weiteren Schritt wird dann erneut die Lage der Spektrallinien geprüft. Liegen die Spektrallinien innerhalb eines vorgegebenen Intervalls um die Referenzlage, so befindet sich das Spektrometer im "Referenzzustand". Die Zuordnung ist aber möglicherweise nicht perfekt. Dies kann an Nichtlinearitäten liegen, oder daran, daß sich die Drehachsen nicht in ihrer optimalen Lage befinden. Dann liegen die Spektrallinien zwar näher an ihrer Referenzposition, aber nicht direkt darauf. Der Justiervorgang wird daher wiederholt, bis sich alle Spektrallinien an ihren Referenzpositionen befinden. Je nach Qualität der Zuordnungsvorschrift und der Stellelemente ist nur eine oder aber auch bis zu 100 Wiederholungen nötig. Danach befinden sich alle Spektrallinien in ihren Referenzpositionen. Das Spektrometer hat dann eine sehr genau definierbare Auflösung. Die Anordnung ist durch Rechnersteuerung auch zur "online"-Stabilisierung geeignet. Dabei wird in regelmäßigen kurzen Abständen eine Justierung vorgenommen.

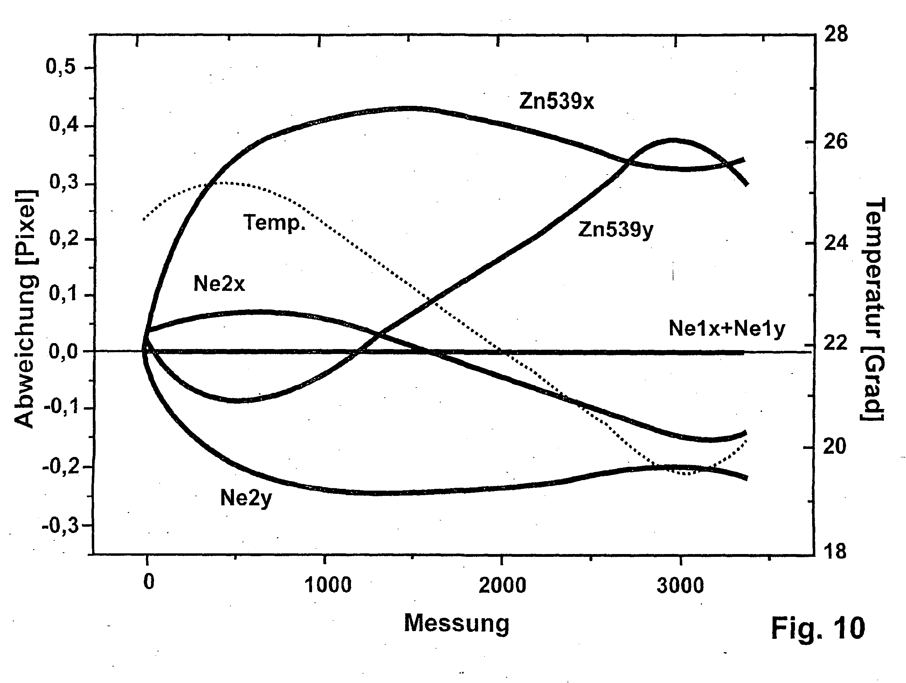

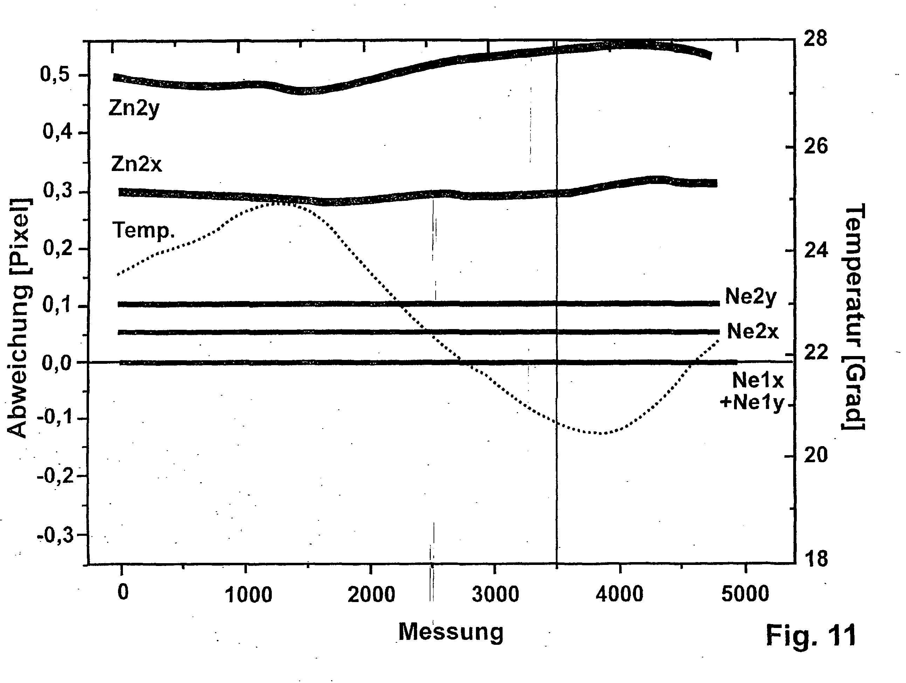

In Fig.10 und Fig.11 ist die Lageverschiebung verschiedener Spektrallinien bei veränderlicher Temperatur dargestellt. Es sind drei Spektrallinien dargestellt, von denen zwei (Ne1 Ne2) in zwei benachbarten Ordnungen jeweils am Ordnungsende liegen, während die dritte (Zn2) in einer dritten Ordnung in der Ordnungsmitte liegt. In Fig. 10 wurde nur die erste Neonlinie, die mit Ne1 bezeichnet ist, stabilisiert, d.h. es wurde nur die Translation des Spektrums über die beiden Piezoelemente am Kameraspiegel kompensiert. In Fig.11 ist die gesamte Stabilisierung aktiv, d. h. zusätzlich die Piezoelemente am Gitter und am Detektor und der passive Prismenkompensator. Man erkennt deutlich, daß die Linien erheblich weniger driften als ohne Stabilisierung. Die Nullpositionen für Ne2x, Ne2y, Zn2x und Zn2y sind zur besseren Übersicht jeweils parallelverschoben dargestellt.

Um ein möglichst gutes Signal-Untergrund-Verhältnis im Spektrum zu erhalten werden die Intensitäten derjenigen Detektorelemente, die mit Licht der gleichen Wellenlänge bestrahlt werden, aufaddiert (Binning). Dazu werden zunächst die zusammengehörigen Detektorelemente bestimmt. Diese "Binningbereiche" verlaufen jeweils etwa senkrecht zu den Ordnungen, die aufgrund der Prismendispersion gekrümmt sind.

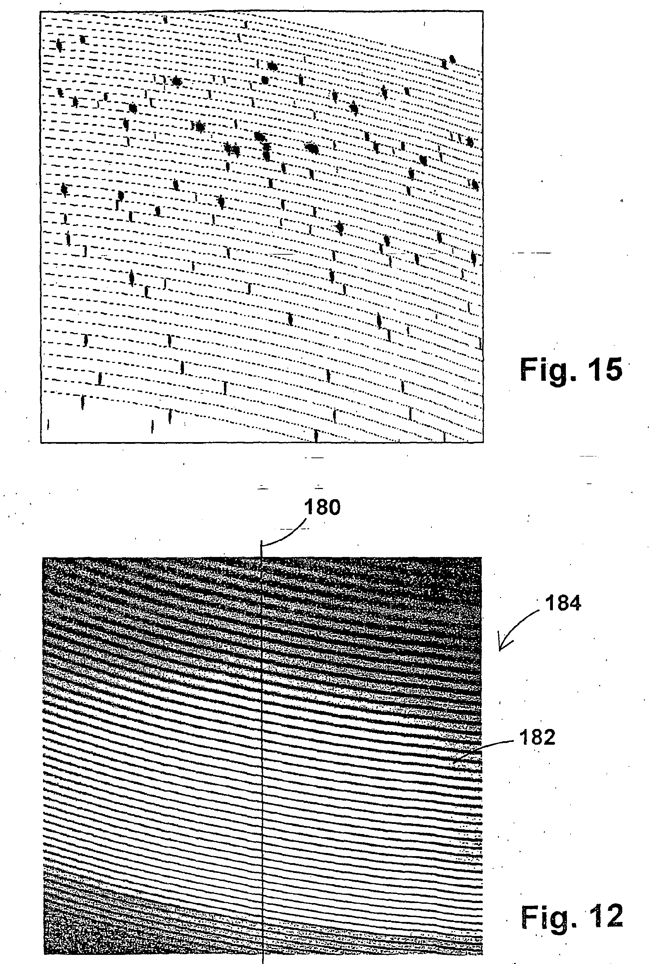

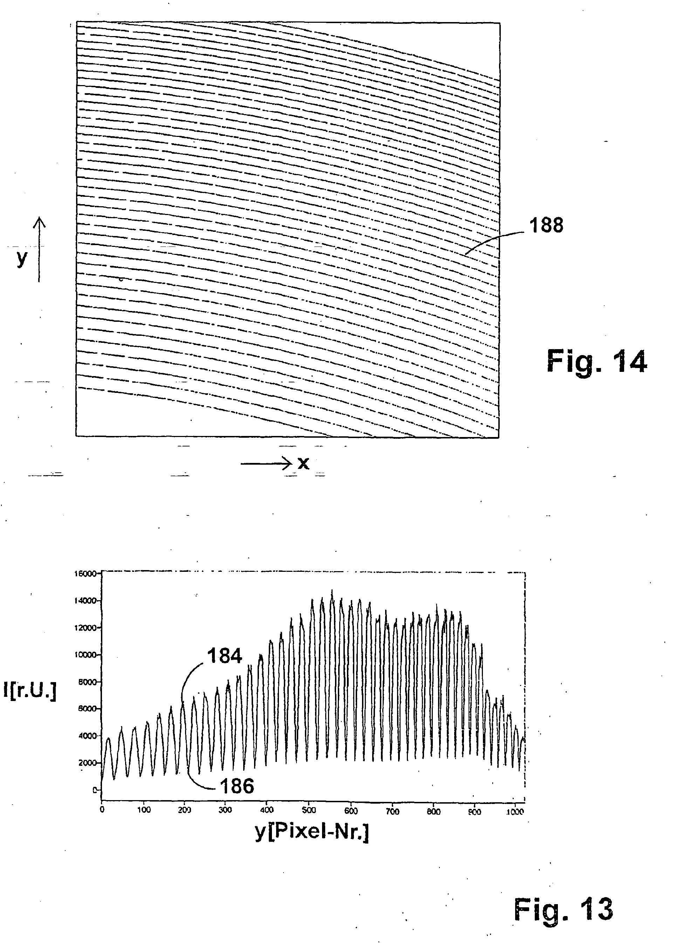

Zunächst wird eine Detektorspalte 180 etwa in der Mitte des Detektors 184 ausgewählt, die im wesentlichen quer zu den Ordnungen 182 verläuft (Fig.12). Wenn die Ordnungen im wesentlichen entlang der Spalten verlaufen, wird eine Detektorzeile ausgewählt. Das Licht eines Kontinuum-Strahlers, welcher ein kontinuierliches Spektrum über den gesamten betrachteten Bereich ausstrahlt, wird in das Spektrometer eingekoppelt und die Intensitäten I auf den Detektorelementen der Detektorspalte 180 ermittelt. Der Intensitätsverlauf in Abhängigkeit vom y-Wert entlang der Detektorspalte ist in Fig.13 dargestellt.

Die Ordnungsmitten liegen in etwa an den Maxima 184, die Minima 186 stellen die Mitten zwischen den Ordnungen dar. Um die Binning-Bereiche zu ermitteln, muß zunächst der genaue Ordnungsverlauf jeder interessierenden Ordnung ermittelt werden. Dies kann durch Beschreibung der Minima zwischen den Ordnungen oder durch Beschreibung der Maxima erfolgen. Die Minima sind im vorliegenden Fall schärfer ausgeprägt als die Maxima und werden daher ausgewählt. Bei großer Ordnungstrennung sind die Maxima besser geeignet.

Als nächster Schritt werden die Detektorelemente bestimmt, auf denen die Intensität lokale Minima aufweist. Diese stellen die Mitten zwischen den Ordnungen dar. In Fig.13 sind das die y-Werte bei y=32, 66, 98...1010. Diese Werte stellen zusammen mit dem x-Wert der Detektorspalte die Startwerte für die verschiedenen Ordnungen dar.

Als nächstes muß der Verlauf des Minimums entlang der Ordnung verfolgt und beschrieben werden. Hierzu wird ausgehend von einem lokalen Minimum $(x_S, y_{m, min})$ als Startwert das nächste Detektorelement $(x_S+1, y_m)$ entlang der jeweiligen Ordnung sowie ein Detektorelement darüber und darunter $(x_{S+1}, y_m \pm 1)$ ausgewählt. Das Bildelement dieser drei Bildelemente mit der geringsten Intensität wird als Minimum zwischen den zwei betrachteten Ordnungen für diese benachbarte Detektorspalte angenommen. Es dient wiederum als Ausgangswert für die Auswahl der nächsten drei benachbarten Bildelemente aus denen wiederum dasjenige mit der geringsten Intensität ausgewählt wird. Der Vorgang wird auf beiden Seiten der ursprünglichen Spalte für jede Ordnung wiederholt, bis für jede Spalte alle Minima bestimmt sind. Die Gesamtheit aller ausgewählten Bildelemente verläuft dann entlang des Minimums zwischen zwei Ordnungen. Drei Pixel sind für die Bestimmung der Minima ausreichend, da keine Sprünge im Verlauf der Ordnungen vorkommen.

Der Verlauf des Minimums zwischen zwei Ordnungen wird dann mittels einer FitFunktion, z.B. einem Polynom zweiter oder dritter Ordnung, das durch die ausgewählten Minima verläuft, beschrieben. Dadurch erreicht man die Kompensation von Digitalisierungseffekten, die daher kommen, daß die Ortsverteilung des Minimums in Sprüngen verläuft. Der Grad des Polynoms hängt vom Grad der Kürmmung ab und beträgt 2 oder 3. Bei dem beschriebenen Spektrum ist ein Polynom 2.Grades angemessen. Es lautet dann

$$y_{\min}(x) = a_0 + a_1 x + a_2 x^2$$

wobei die Koeffizienten $a_0, a_1$, und $a_2$ die Fit-Parameter darstellen und x die Spaltenzahl. Dieser Vorgang wird für jede Ordnung wiederholt, bis alle Ordnungen durch Polynome mit festen Koeffizienten beschrieben sind. Das Resultat dieser Fit-Prozedur ist in Fig.14 dargestellt. Dort sind die Fit-Funktionen 188 y(x) für alle interessierenden Ordnungen dargestellt.

Die Binning-Bereiche sind dann alle Detektorelemente einer Spalte zwischen je zwei benachbarten gefitteten Funktionen. Die Funktionen können auch nichtganzzahlige Werte annehmen. Dann werden die Funktionen über die Breite eines Detektorelements auf seinen Mittenwert festgelegt. Die Intensität an diesem Detektorelement wird entsprechend beim Binning nur anteilig berücksichtigt. Dadurch wird der Digitalisierungseffekt, der beim Binning gewöhnlich auftritt, kompensiert.

Es ergibt sich eine Funktionenschar, die als solche in Form der Koeffizienten abgespeichert werden kann. Im vorliegenden Fall wurde aber auch die Funktionenschar gefittet durch einen sekundären Fit der Koeffizienten. Hierzu wurden die Koeffizienten dargestellt durch eine Matrix:

$$a_{0,1}, \ a_{0,2} \ldots a_{0,m}$$

$$a_{1,1}, \ a_{1,2} \ldots a_{1,m}$$

$$a_{2,1}, \ a_{2,2} \ldots a_{2,m}$$

und die korrespondierenden Koeffizienten jeder Ordnung, z.B. die konstanten Glieder $a_{0,1}$, $a_{0,2}$...$a_{0,m}$, erneut durch eine Fitfunktion beschrieben. Es bleiben dann 3 Koeffizienten für jede der sekundären Fitfunktionen übrig. Das heißt, daß die gesamte Funktionenschar mittels 9 Koeffizienten beschrieben wird. Bei der Verwendung eines Polynoms 3.Grades würden 16 Koeffizienten ausreichen. Dadurch wird die Datenmenge zur Beschreibung des Ordnungsverlaufs erheblich reduziert. Außerdem sind die Funktionen $y_m(x)$ zuverlässiger, da Digitalisierungseffekte, Rauschen etc. durch den Fit minimiert wurden.

Bei der Bestimmung der Binning-Bereiche für die tatsächliche Messung werden die Bildelemente anteilig berücksichtigt, jedoch Spaltenweise diskret. Der Binningbereich stellt den Bereich zwischen zwei Minima dar und die Intensitätswerte werden entsprechend aufaddiert. Durch dieses Verfahren erhält man aus einer 2-dimensionalen Intensitätsverteilung I(x,y) eine Schar von eindimensionalen Spektren $I_m(x)$, wobei m die Ordnung bezeichnet.

Um die für die Spektroskopiker interessante Funktion I(λ) zu erhalten, muß $I_m(x)$ kalibriert werden. Hierzu muß jeder Position x des gebinnten Spektrums eine Wellenlänge λ zugeordnet werden. Gesucht ist also zunächst die Funktion $\lambda_m(x)$.

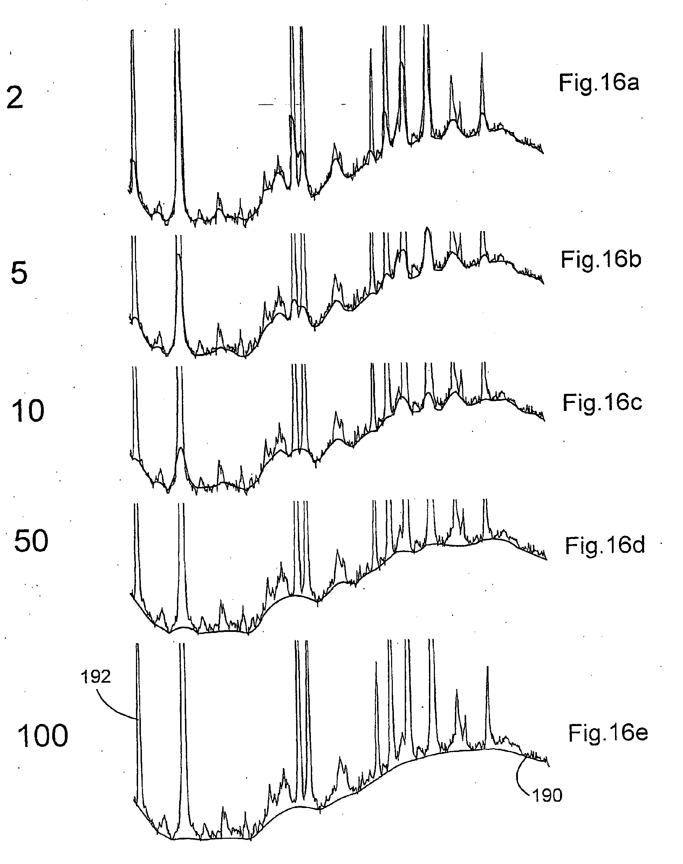

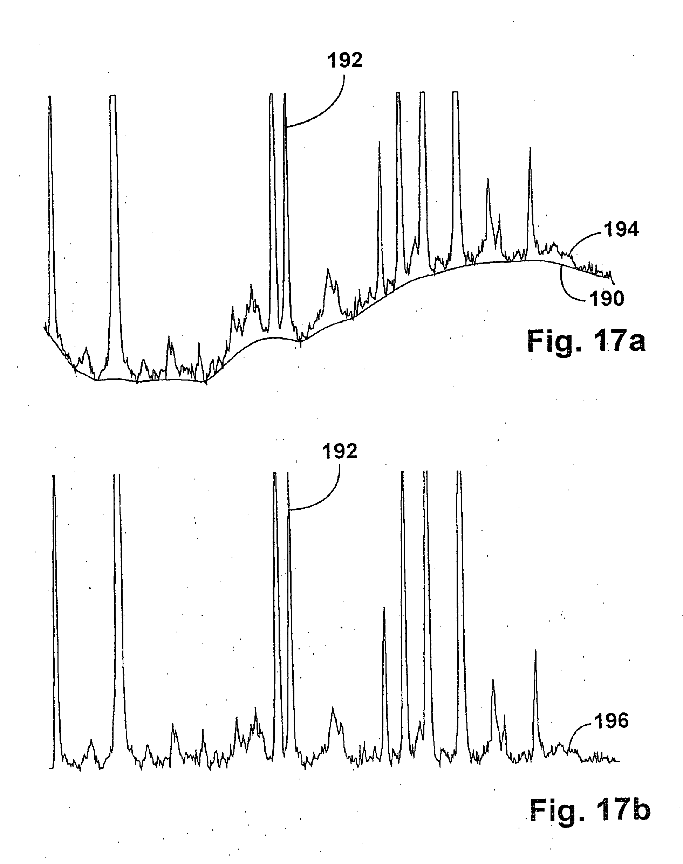

Die Kalibrierung erfolgt durch Vergleich des gemessenen Spektrums mit einem Referenzspektrum, das von einem Linienstrahler mit einer hohen Anzahl an Spektrallinien aufgenommen wurde. Ein Ausschnitt eines solchen Spektrums ist in Fig. 16 und in Fig. 17 dargestellt. Für den UV-Bereich zwischen 200 - 350 nm sind die Platinlinien besonders gut geeignet. Die Liniendaten liegen bereits als Datei (Atlas) vor. In dieser Datei sind die Wellenlängen der Linienschwerpunkte und die relativen Intensitäten gespeichert. Im Bereich zwischen 650 nm - 1000 nm eignen sich die Edelgaslinien von Pen-Ray-Lampen, bei denen die Spektren mit der Software aufaddiert wurden.

Das aufgenommene Spektrum muß zunächst bezüglich breitbandigem Untergrund korrigiert werden. In Fig. 16e ist der Untergrund mit 190 bezeichnet. Die Spektrallinien sind mit 192 bezeichnet. Der breitbandige Untergrund entsteht zum Beispiel durch Streulicht, nichtaufgelöste Rotations-Schwingungsbanden von Molekülen oder dergleichen.

Zur Untergrundkorrektur gibt es mehrere Verfahren. Üblicherweise wird der Untergrund zunächst bestimmt und dann vom ursprünglichen Spektrum subtrahiert. Zur Bestimmung des Untergrunds wird die Funktion $I_m(x)$ mit moving avarage geglättet. Das heißt, an jedem Punkt x wird die Intentsität I(x) durch den Mittelwert

$$\bar{I}(x) = \frac{\sum_{\nu}^{\nu_{max}} I(x_\nu)}{\nu_{max}}$$

ersetzt. Dabei entspricht die Breite $\nu_{max}$ des moving avarage etwa dem Doppelten einer Linienbreite. Wenn die durchschnittliche Linienbreite etwa 5 Pixel beträgt, so ist $\nu_{max} = 10$. Bei der geglätteten Funktion wird dann jeder Wert, bei dem der Wert der ursprünglichen Kurve über dem Wert der geglätteten Kurve liegt, auf den Wert der geglätteten Kurve gesetzt.

Im nächsten Schritt wird dann die auf diese Weise modifizierte Kurve erneut mit moving average geglättet. Auch nach dieser wiederholten Glättung der modifizierten Kurve wird die Kurve erneut modifiziert, indem die Werte, die über dem Wert der geglätteten Kurve liegen, auf den Wert der geglätteten Kurve gesetzt werden. Das Resultat der 2-fachen Glättung ist in Fig.16 a dargestellt. Man erkennt, daß die Peaks schrumpfen, während der Rest der geglätteten Kurve sich gut an die ursprüngliche Kurve anschmiegt.

Der Prozess der Glättung und das Herabsetzen der Werte auf den Peaks wird 100 mal wiederholt. In Fig. 16b bis Fig.16e sind die ursprünglichen Werte und die Kurven mit 5-facher, 10-facher, 50-facher und 100-facher Wiederholung dargestellt. Am Ende spiegelt die geglättete Kurve den Wert der ursprünglichen Kurve ohne Peaks wieder, d.h. sie beschreibt den breitbandigen Untergrund.

In Fig.17 a ist der Untergrund 190 und die ursprüngliche Kurve 194 mit Peaks 192 dargestellt. Im nächsten Schritt wird die Korrektur durchgeführt indem der Untergrund von der ursprünglichen Kurve subtrahiert wird. Die Differenzkurve 196 ist in Fig.17 b dargestellt. Man erkennt, daß bis auf ein Rauschen nur noch Peaks 192 im Spektrum vorhanden sind. Die gebinnte und Untergrund-korrigierte Kurve wird dann zur weiteren Kalibrierung verwendet.

Zunächst wird ein Startwert bestimmt. Das ist eine Linie, die dem Spektroskopiker gut bekannt ist. Beispiele hierfür sind: Linien, die in mehreren Ordnungen auftauchen, Na-Doppellinie, Hg253 o.ä., die ein besonders markantes Profil haben oder dem Spektroskopiker sonst gut bekannt sind. Diesen bekannten ersten Linien wird die bekannte, genaue Wellenlänge sowie die bekannte Ordnungszahl $m_0$ zugeordnet.

Weiterhin werden alle Spektrallinien, deren Intensität einen vorgegebenen Wert überschreiten, ermittelt. Dies geschieht, indem zunächst ein Schwellwert festgelegt wird und das Maximum jeder Linie, die diesen Schwellwert überschreitet, ermittelt wird. Eine Spektrallinie wird dann angenommen, wenn die Linienflanken auf beiden Seiten des Maximums monoton bis auf einem Prozentsatz von 30% des Maximums abfallen. Für jede Linie, die dieses Kriterium erfüllt, wird dann die genaue Position des Schwerpunkts ermittelt, sowie die Intensität und Halbwertsbreite (in Pixeln) der Linie. Die Position (=x-Wert) des Schwerpunkts braucht dabei keine ganzzahlige Zahl zu sein.

Das Ergebnis dieser Prozedur ist ein Katalog von Referenzlinien, deren Position auf dem Detektor und Eigenschaften genau bekannt sind. Für die bekannten ersten Linien in einer bekannten ersten Ordnung (Startordnung) wird dann eine Wellenlängenskala ermittelt, indem die Wellenlängen $\lambda_i$ durch ein Polynom 2.Ordnung gefittet werden nach:

$$\lambda_m(x) = a_0(m_0) + a_1(m_0)x + a_2(m_0)x^2$$

Dabei ist es günstig, wenn die bekannte erste Ordnung in der Mitte des Spektrums liegt. Der Wert der Ordnung kann ermittelt werden aus den Nenndaten des Gitters. Diese Wellenlängenskala dient nun als Basis für die Berechnung einer vorläufigen Wellenlängenskala für die nächste benachbarten Ordnungen $m \pm 1$ nach

$$\lambda_{m \pm 1}(x) = \lambda_m(x) \pm \Delta\lambda_{FSR} \,,$$

mit dem "freien Spektralbereich" $\Delta\lambda_{FSR} = \lambda_m(x)/m$. Die vorläufige Wellenlängenskala ist ausreichend, um die Referenzlinien, die in dieser Ordnung liegen, zu identifizieren. Die Wellenlängen der Referenzlinien werden aus der Datei mit den genauen Wellenlängen (Atlas) genommen und zugeordnet. Aus den Atlaswerten und den genauen Schwerpunktspositionen der Referenzlinien wird durch einen Polynom-Fit erneut eine genaue Wellenlängenskala ermittelt. Dabei werden nur solche Referenzlinien berücksichtigt, für die der Atlaswert mit der Schwerpunkt-Wellenlänge der vorläufigen Wellenlängenskala innerhalb eines vorgegebenen Toleranzbereichs übereinstimmt.

Aus diesem Fit wird erneut eine vorläufige Wellenlängenskala für die nächste Ordnung $m \pm 2$ bestimmt, mit der dann wiederum die Referenzlinien identifiziert werden. Auf diese Weise werden alle Ordnungen abgearbeitet, für die eine Wellenlängenskala ermittelt werden soll. Es ergibt sich eine komplette Zuordnung der Wellenlängen zu den Positionen. Bei dem Verfahren werden Linien mit schlechten Fitparametern durch falschen Atlaswert oder falsche Zuordnung nicht berücksichtigt. Die Auswahl der "schlechten" Linien kann von Hand oder automatisch erfolgen. Im letzteren Fall müssen Qualitätskriterien für die Fitparameter in Form von Toleranzen eingefügt werden.

Wenn die Wellenlängenskala für jede Ordnung bestimmt ist, bilden die Koeffizienten eine Matrix. Die korrespondierenden Koeffizienten zeigen eine Ordnungsabhängigkeit. Diese Ordnungsabhängigkeit kann wiederum durch eine Fitfunktion beschrieben werden. Dabei hat sich für die Fitfunktion der Koeffizienten der 0.Ordnung ein Polynom als geeignet erwiesen, welches die 1/m-Abhängigkeit mitberücksichtigt:

$$a_0(m) = a_{00}m^{-1} + a_{01}m + a_{02}m^2 + a_{03}m^3$$

$$a_1(m) = a_{10} + a_{11}m + a_{12}m^2 + a_{13}m^3$$

$$a_2(m) = a_{20} + a_{21}m + a_{22}m^2 + a_{23}m^3$$

Auf diese Weise kann die Wellenlängenfunktion $\lambda(x)$ mittels weniger Koeffizienten beschrieben und gespeichert werden. Das Spektrum $I(\lambda)$ ergibt sich dann nach $I(\lambda)=I(\lambda(x))$.

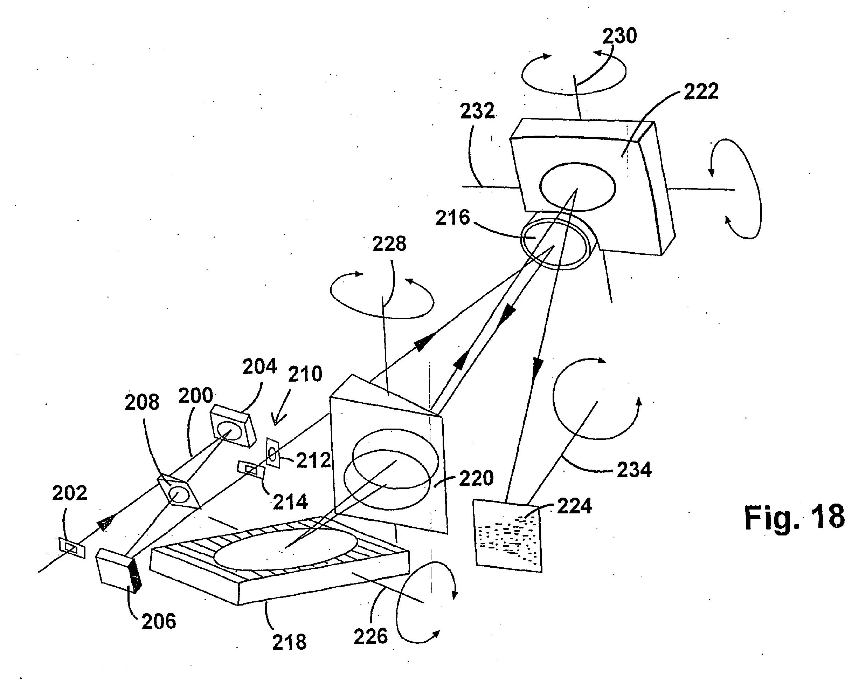

In Fig.18 ist ein Echelle-Spektrometer nach einem weiteren Ausführungsbeispiel gezeigt Die Strahlung, repräsentiert durch ihre optische Achse 200 wird vor Eintritt in das Spektrometer vorzerlegt. Hierfür ist eine Anordnung bestehend aus einem Eintrittsspalt 202, UV-beschichteten Toroid-Spiegeln 204 und 206, sowie einem Prisma 208 vorgesehen. Die Strahlung tritt dann durch eine Eintrittsspaltanordnung 210 mit zwei gekreuzten, versetzt angeordneten Eintrittsspalten 212 und 214. Ein Kollimatorspiegel 216 in Form eines sphärischen Spiegels reflektiert das Bündel in Richtung auf das Echelle-Gitter 218. Zwischen Echelle-Gitter 218 und Kollimatorspiegel 216 ist ein Prisma 220 zur Querdispersion angeordnet. Nach der Dispersion am Gitter 218 durchtritt die Strahlung erneut das Prisma und fällt auf einen Kameraspiegel 222. Der Kameraspiegel 222 fokussiert das dispergierte Licht in der Austrittsebene 224.

Das Gitter ist um eine Achse 226 drehbar gelagert. Das Prisma ist um eine Achse 228 drehbar gelagert. Der Kameraspiegel ist um zwei Achsen 230 und 232 drehbar gelagert und der Detektor (nicht dargestellt) ist um eine Achse 234 drehbar gelagert. Durch diese Anordnung ist eine Justierung des Spektrums in der Austrittsebene in eine Referenzlage ähnlich wie im ersten Ausführungsbeispiel möglich.

**Patentansprüche**

1. Verfahren zur Bestimmung von Binning-Bereichen eines Flächendetektors für zweidimensionale Echelle-Spektren in der Austrittsebene eines Echelle-Spektrometers, **gekennzeichnet durch** die Schritte

(a) Ermitteln der Lage $(x, y_{min,m})$ desjenigen Detektorelements für jede Spalte x, auf dem die Intensität I eines Strahlers mit kontinuierlichem Spektrum ein Minimum $I_{min} = I(x, y_{min,m})$ zwischen zwei Ordnungen m und m+1 annimmt,

(b) Ermitteln einer stetigen Funktion $y_{min,m}(x)$, die den Verlauf des Intensitätsminimums $I_{min}$ zwischen den zwei Ordnungen m und m+1 als Funktion der Spaltenzahl x darstellt,

(c) Wiederholen der Schritte (a) und (b) für den Verlauf $y_{min,m-1}(x)$ wenigstens eines Intensitätsminimums zwischen den nächsten zwei benachbarten Ordnungen m-1 und m,

(d) Bestimmen von Binning-Bereichen für eine Ordnung m, die sich aus allen Detektorelementen (x,y) zusammensetzen, für die gilt:

$$x = \text{constant und } y_{min,m-1}(x) < y < y_{min,m}(x),$$

(e) wobei die Funktion nach Schritt (b) von einer Fitfunktion $y_{min,m}(x) = y_m(x)$ **durch** die nach Schritt (a) ermittelten Detektorelemente gebildet wird, und

(f) die Binning-Bereiche Intensitäten von Detektorelementen anteilig berücksichtigen, wenn der Wert der Fitfunktion auf einem Detektorelement keinen ganzzahligen Wert in der Mitte des Detektorelements in x-Richtung annimmt.

2. Verfahren zur Bestimmung von Binning-Bereichen eines Flächendetektors für zweidimensionale Echelle-Spektren in der Austrittsebene eines Echelle-Spektrometers, **gekennzeichnet durch** die Schritte

(a) Ermitteln der Lage $(x, y_{max,m})$ desjenigen Detektorelements für jede Spalte x, auf dem die Intensität I eines Strahlers mit kontinuierlichem Spektrum ein Maximum $I_{max} = I(x, y_{max,m})$ in einer Ordnung m annimmt,

(b) Ermitteln einer stetigen Funktion $y_{max,m}(x)$, die den Verlauf des Intensitätsmaximums $I_{max}$ in einer Ordnung m als Funktion der Spaltenzahl x darstellt,

(c) Wiederholen der Schritte (a) und (b) für den Verlauf $y_{max,m-1}(x)$ wenigstens eines Intensitätsmaximums der nächsten benachbarten Ordnung m-1 oder m+1,

(d) Bestimmen von Binning-Bereichen für eine Ordnung m, die sich aus allen Detektorelementen (x,y) zusammensetzen, für die gilt:

$$x = \text{constant und } |y| < y \pm |\Delta y_{m, m\pm1}/2|,$$

wobeit $\Delta y_{m, m\pm1}$ den Abstand zwischen dem Maximum der Ordnung m und dem Maximum der Ordnung m±1 bezeichnet,

(e) wobei die Funktion nach Schritt (b) von einer Fitfunktion $y_{max,m}(x) = y_m(x)$ **durch** die nach Schritt (a) ermittelten Detektorelemente gebildet wird, und

(f) die Binning-Bereiche Intensitäten von Detektorelementen anteilig berücksichtigen, wenn der Wert der Fitfunktion auf einem Detektorelement keinen ganzzahligen Wert in der Mitte des Detektorelements in x-Richtung annimmt.

3. Verfahren nach Anspruch 1 bzw. 2, **dadurch gekennzeichnet, dass** die Lage des Detektorelements nach Schritt (a) ermittelt wird durch folgende Schritte

(a1) Auswählen einer Detektorspalte x,

(a2) Einstrahlen von Licht eines Strahlers mit kontinuierlichem Spektrum in das Spektrometer,

(a3) Bestimmen des Detektorelements in der ausgewählten Spalte x auf dem das Intensitätsminimum zwischen zwei Ordnungen bzw. das Intensitäts maximum für eine ausgewählte Ordnung m liegt,

(a4) Bestimmen des Detektorelements der nächsten benachbarten Spalte x+1, auf dem das Intensitätsminimum bzw. das Intensitäts maximum der drei zueinander benachbarten Detektorelemente liegt, die unmittelbar an das in Schritt (a3) bestimmte Detektorelement grenzen und

(a5) wiederholen des Schrittes (a4) für alle Spalten x.

4. Verfahren nach Anspruch 3, **dadurch gekennzeichnet, dass** die Fitfunktion ein Polynom, insbesondere ein Polynom zweiten oder dritten Grades ist und nur die Koeffizienten des Polynoms für jede Ordnung gespeichert werden.

5. Verfahren nach Anspruch 4, **dadurch gekennzeichnet, dass** aus den miteinander korrespondierenden Koeffizienten des Polynoms jeder Ordnung eine sekundäre Funktion gebildet wird und diese Funktion mittels einer Fitfunktion, die wiederum von einem Polynom gebildet wird, optimiert wird und nur die Polynomkoeffizienten der sekundären Fitfunktion gespeichert werden.

6. Echelle-Spektrometer mit einem Echelle-Gitter und einem weiteren Dispersionselement zur Ordnungstrennung der Ordnungen des Echelle-Spektrums quer zur Dispersionsrichtung des Echelle-Gitters, einem Flächendetektor mit einer Vielzahl von Detektorelementen in der Austrittsebene des Spektrometers zur Erfassung des zweidimensionalen Echelle-Spektrums, einem Strahler, Mittel zum Einkoppeln von Licht dieses Strahlers in das Spektrometer und Rechnermitteln

**dadurch gekennzeichnet dass**

(a) der Strahler ein kontinuierliches Spektrum über den gesamten betrachteten Bereich emittiert,

(b) Mittel zur Bestimmung von Detektorelementen vorgesehen sind, auf welchen das Licht des Strahlers mit kontinuierlichem Spektrum ein Minimum zwischen zwei benachbarten Ordnungen annimmt, und

(c) Rechnermittel zur Bestimmung einer Funktion $I_m(x)$ vorgesehen sind, wobei m eine Ordnung und x und y Koordinaten eines Punktes auf dem Detektor bezeichnen, die einen eindimensionalen Intensitätsverlauf repräsentiert, aus einer Vielzahl von Punkten (x, y) auf dem Detektor und der zugehörigen Intensitätsverteilung $I(x, y)$, und

(d) Mittel zur Durchführung der Verfahrensschritte nach einem der vorgehenden Ansprüche.

7. Echelle-Spektrometer nach Anspruch 6, **dadurch gekennzeichnet, dass** die mit auswählbaren, benachbarten Detektorelementen messbare Intensität hardwaremäßig zu einem Intensitätswert zusammenfassbar ist.

8. Echelle-Spektrometer nach einem der Ansprüche 6 oder 7, **dadurch gekennzeichnet, dass** die Ordnungstrennung gerade so groß ist, dass die Intentsitätsminima zwischen den Ordnungen sich auf nicht mehr als zwei Detektorelemente quer zu den Ordnungen verteilen.

## Claims

1. Method for determining binning ranges on a plane detector for two dimensional echelle spectra in the exit plane of an echelle spectrometer, **characterized by** the steps:

(a) For each column x determining the position $(x, y_{min,m})$ of the detector element where the intensity I of the light source with the continuous spectrum is a minimum $I_{min}=I(x, y_{min,m})$ between two orders m and m+1,

(b) Determining a continuous function $y_{min,m}(x)$ representing the shape of the intensity minimum $I_{min}$ between the two orders m and m+1 as a function of the column number x,

(c) Repeating steps (a) and (b) for the shape $y_{min,m-1}(x)$ of at least one intensity minimum between the next adjacent orders m-1 and m,

(d) Determining the binning ranges for one order m being the sum of all detector elements (x, y) for which:

$$x = \text{constant and } y_{min,m-1}(x) < y < y_{min,m}(x),$$

(e) wherein the function according to step (b) is formed by a fitting function $y_{min,m}(x)= y_m(x)$ through the detector elements determined according to step (a), and
(f) the binning ranges take into account portions of intensities of detector elements, if the value of the fit function is not an integer value in the middle of the detector element in an x-direction on the detector element.

**2.** Method for determining binning ranges on a plane detector for two dimensional echelle spectra in the exit plane of an echelle spectrometer, **characterized by** the steps:

(a) For each column x determining the position $(x, y_{max,m})$ of the detector element where the intensity I of the light source with the continuous spectrum is a maximum $I_{max}=I(x,y_{max,m})$ in an order m,
(b) Determining a continuous function $y_{max, m}(x)$ representing the shape of the intensity maximum $I_{max}$ in an order m as a function of the column number x,
(c) Repeating steps (a) and (b) for the shape $y_{max, m-1}(x)$ of at least one intensity maximum of the next adjacent order m-1 or m+1,
(d) Determining the binning ranges for one order m being the sum of all detector elements (x, y) for which:

$$x=\text{constant and} \quad y \quad <y\pm \quad \Delta y_{m,m\pm1}/2 \quad ,$$

(e) wherein the function according to step (b) is formed by a fitting function $y_{max,m}= y_m(x)$ through the detector elements determined according to step (a), and
(f) the binning ranges take into account portions of intensities of detector elements, if the value of the fit function is not an integer value in the middle of the detector element in an x-direction on the detector element.

**3.** Method according to claim 1 or 2, respectively, **characterized in that** the position of the detector element according to step (a) is determined by the following steps:

(a1) selecting of a detector column x,
(a2) illuminating the spectrometer with the light of a light source with a continuous spectrum
(a3) determining the detector element in the selected column x, whereon lays the intensity minimum between two orders or the maximum of the intensity, respectively of a selected order m,
(a4) determining the detector element in the next adjacent column x+1, whereon lays the intensity minimum or the intensity maximum, respectively, of three adjacent detector elements right next to the detector element determined in step (a3) and
(a5) repeating step (a4) for all columns x.

**4.** Method according to claim 3, **characterized in that** the fitting function is a polynomal function, especially a polynomal of second or third order and only the coefficients of the polynomal function are stored.

**5.** Method according to claim 4, **characterized in that** an order dependent, secondary function is formed from the corresponding coefficients of the polynomal function of each order and this function is fitted by means of a secondary fitting function which is formed by a polynomal function, optimized and where only the polynomal coefficients of the secondary fitting function are stored.

**6.** Echelle spectrometer with an echelle grating and a further dispersive element for separation of the orders of the echelle spectrum laterally to the dispersion direction of the echelle grating and a plane detector with a plurality of detector elements in the exit plane of the spectrometer for detecting the two dimensional echelle spectrum, a light source, means for coupling light from this light source into the spectrometer and computer means **characterized in that**

(a) the light source emits a continuous wavelength spectrum over the entire considered range,
(b) means for the detemining of detector elements are provided on which the light of said light source with a continuous wavelength spectrum is a minimum between the orders, and
(c) computer means for determining a function $I_m(x)$ from the plurality of points on the detector and the corresponding shape of the intensity $I(x,y)$ are provided where m is an order and x and y are coordinates of a point on the detector representing a one-dimensional shape of the intensity, and
(d) means are provided for carrying out the method steps of one of the preceding claims.

7. Echelle spectrometer according to claim 6, **characterized in that** the intensity measured with selectable, adjacent detector elements is accumulated to one intensity value by hardware.

8. Echelle spectrometer according to one of the preceding claims 6 or 7, **characterized in that** the separation of the orders is such that the intensity minima between the orders do not extend beyond more than two detector elements perpendicular to the orders.

**Revendications**

1. Procédé pour la détermination de zones de binning d'un détecteur de surface pour des spectres échelle bidimensionnels dans le plan d'émergence d'un spectromètre échelle, **caractérisé par** les étapes de

    (a) Calcul de la position $(x, y_{min,m})$ de l'élément détecteur pour chaque colonne x sur lequel l'intensité I d'un émetteur à spectre continu revêt un minimum $I_{min} = I(x, y_{min,m})$ entre deux degrés m et m+1,
    (b) Calcul d'une fonction constante $y_{min,m}(x)$ qui représente, sous forme de fonction du nombre de colonnes x, le tracé du minimum d'intensité $I_{min}$ entre les deux degrés m et m+1,
    (c) Réitération des étapes (a) et (b) pour le tracé $y_{min,m-1}(x)$ d'au moins un minimum d'intensité entre les deux degrés voisins suivants m-1 et m,
    (d) Détermination de zones de binning pour un degré m se composant de tous les éléments détecteurs (x,y), pour lesquelles on a:

$$X = \text{constant et } y_{min,m-1}(x) < y < y_{min,m}(x) \text{ ,}$$

    (e) la fonction selon l'étape (b) étant formée par une fonction de fit $t_{min,m}(x) = y_m(x)$ par les éléments détecteurs calculés selon l'étape (a), et
    (f) les zones de binning prennent en compte les parts d'intensité d'éléments détecteurs lorsque la valeur de la fonction de fit sur un élément détecteur ne revête pas de valeur entière au centre de l'élément détecteur dans le sens x.

2. Procédé pour la détermination de zones de binning d'un détecteur de surface pour des spectres échelle bidimensionnels dans le plan d'émergence d'un spectromètre échelle, **caractérisé par** les étapes de

    (a) Calcul de la position $(x, y_{max,m})$ de l'élément détecteur pour chaque colonne x sur lequel l'intensité I d'un émetteur à spectre continu revêt un minimum $I_{max} = I(x, y_{max,m})$ entre deux degrés m et m+1,
    (b) Calcul d'une fonction constante $y_{max,m}(x)$ qui représente, sous forme de fonction du nombre de colonnes x, le tracé du maximum d'intensité $I_{max}$ entre les deux degrés m et m+1,
    (c) Réitération des étapes (a) et (b) pour le tracé $y_{max,m-1}(x)$ d'au moins un minimum d'intensité entre les deux degrés voisins suivants m-1 et m,
    (d) Détermination de zones de binning pour un degré m se composant de tous les éléments détecteurs (x,y), pour lesquelles on a:

$$X = \text{constant et } |y| < y \pm |\Delta y_{m,m\pm1}/2| \text{ ,}$$

    $\Delta y_{m,m\pm1}$ désignant l'écart entre le maximum du degré m et le maximum du degré m+1,
    (e) la fonction selon l'étape (b) étant formée par une fonction de fit $y_{max,m}(x) = y_m(x)$ par les éléments détecteurs calculés selon l'étape (a), et
    (f) les zones de binning prennent en compte les parts d'intensité d'éléments détecteurs lorsque la valeur de la fonction de fit sur un élément détecteur ne revête pas de valeur entière au centre de l'élément détecteur dans le sens x.

3. Procédé selon la revendication 1 ou 2, **caractérisé en ce que** la position de l'élément détecteur selon l'étape (a) est calculée par les étapes suivantes

    (a1) Sélection d'une colonne de détecteur x,

(a2) Irradiation de la lumière d'un émetteur à spectre continu dans le spectromètre,

(a3) Détermination de l'élément détecteur dans la colonne sélectionnée x sur lequel se trouve le minimum d'intensité entre deux degrés ou le maximum d'intensité pour un degré sélectionné m,

(a4) Détermination de l'élément détecteur de la colonne voisine suivante x+1 sur lequel se trouve le minimum d'intensité ou le maximum d'intensité des trois éléments détecteurs adjacents les uns aux autres qui jouxtent l'élément détecteur déterminé à l'étape (a3) et

(a5) Réitération de l'étape (a4) pour toutes les colonnes x.

**4.** Procédé selon la revendication 3, **caractérisé en ce que** la fonction de fit est un polynôme, notamment un polynôme de second ou troisième degré et seuls les coefficients du polynôme sont mémorisés pour chaque degré.

**5.** Procédé selon la revendication 4, **caractérisé en ce qu'**une fonction secondaire est formée à partir des coefficients du polynôme de chaque degré correspondant les uns avec les autres et que cette fonction est optimisée au moyen d'une fonction de fit formée elle aussi par un polynôme, et que seuls les coefficients de polynômes de la fonction de fit secondaire sont mémorisés.

**6.** Spectromètre échelle muni d'un réseau échelle et d'un autre élément de dispersion pour séparer les degrés du spectre échelle diagonalement par rapport au sens de dispersion du réseau échelle, d'un détecteur de surface muni de nombreux éléments détecteurs dans le plan d'émergence du spectromètre afin de saisir le spectre échelle bidimensionnel, d'un émetteur, de moyens de couplage de la lumière dudit émetteur dans le spectromètre et de moyens de calcul, **caractérisé en ce que**

(a) l'émetteur émet un spectre continu sur toute la zone considérée,

(b) sont prévus des moyens de détermination d'éléments détecteurs sur lesquels la lumière de l'émetteur à spectre continu revêt un minimum entre deux degrés voisins, et

(c) sont prévus des moyens de calcul pour déterminer une fonction $I_m(x)$, m désignant un degré et x et y les coordonnées d'un point sur le détecteur représentant un tracé d'intensité unidimensionnel, à partir de nombreux points (x, y) sur le détecteur et de la répartition de l'intensité associée $I(x,y)$, et

(d) des moyens pour la mise en oeuvre des étapes de procédé d'après l'une quelconque des revendications précédentes.

**7.** Spectromètre échelle selon la revendication 6, **caractérisé en ce que** les éléments détecteurs voisins sélectionnables d'intensité mesurable peuvent se résumer du point de vue du hardware en une seule valeur d'intensité.

**8.** Spectromètre échelle selon l'une quelconque des revendications 6 ou 7, **caractérisé en ce que** la séparation des degrés est telle que les minima d'intensité entre les degrés se répartissent seulement sur deux éléments détecteurs au maximum diagonalement par rapport aux degrés.

FIG. 1

FIG. 2

FIG. 3

EP 1 336 084 B1

Fig.4

EP 1 336 084 B1

**Fig. 5**

EP 1 336 084 B1

136

134

138

132

140

60

146

$\alpha_p$

130

128

**Fig. 6**

127

126

**Fig. 7**

**Fig. 8**

**Fig. 9**

Fig. 10

Fig. 11

EP 1 336 084 B1

Fig. 15

Fig. 12

**Fig. 14**

**Fig. 13**

2      Fig.16a

5      Fig.16b

10      Fig.16c

50      Fig.16d

100      Fig.16e

192

190

192

194

190

**Fig. 17a**

192

196

**Fig. 17b**

Fig. 18

EP 1 336 084 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19708462 A1

- DD 260326

**In der Beschreibung aufgeführte Nicht-Patentliteratur**

- **S. Florek ; H. Becker-Roß ; T. Florek.** Adaptation of an echelle spectrograph to a large CCD detector. *Fresenius J. Anal. Chem.,* 1996, vol. 355, 269-271

- **A. Scheeline et al.** Design and Characterization of an Echelle Spectrometer for Fundamental and Applied Emission Spectrochemical Analysis. *Applied Spectroscopy,* 1991, vol. 45, 334